# EUROPEAN PATENT APPLICATION

(11) **EP 1 734 503 A1**
(43) Date of publication of application: **20.12.2006**
(21) Application number: 06115235.1
(22) Date of filing: 09.06.2006
(51) Int. Cl.: G09G 3/34

(54) **Liquid crystal display device and electronic device provided with the liquid crystal display device**

(30) Priority: 13.06.2005 JP 2005172297
(71) Applicant: KABUSHIKI KAISHA TOYOTA JIDOSHOKKI, Kariya-shi, Aichi 448-8671 (JP)
(72) Inventor: Iwata, Hiromu Kabushiki Kaisha Toyota Jidoshokki, Kariya-shi Aichi 448-8671 (JP)
(74) Representative: TBK-Patent

(57) **Abstract**

A liquid crystal display device (40) may comprise a liquid crystal display unit (20), a backlight (10), and a negative voltage generating circuit (30). The backlight (10) may be disposed at the posterior of the liquid crystal display unit (20). The backlight (10) may include an organic EL element (13). The negative voltage generating circuit (30) preferably supplies negative voltage to the liquid crystal display unit (20) and supplies reverse voltage to the organic EL element (13).

## Description

### Background of the Invention

### Field of the Invention

The present invention relates to a liquid crystal display device that utilizes a light emitting device as a backlight, this light emitting device utilizing an organic electroluminescence element (hereafter referred to as an organic EL element).

### Description of the Related Art

At present, cold cathode discharge tubes or inorganic LEDs have chiefly been utilized in backlights of liquid crystal display devices. However, as computers, mobile terminals, and mobile telephones have become more compact and power efficient in recent years, there has been a growing demand for backlights to be thinner and have lower power consumption.
An organic EL element is a light source from which high intensity light can be obtained with low power. The Organic EL element is frequently used as backlight of liquid crystal display device mounted in electronic device such as computer displays, liquid crystal televisions, and mobile telephones. The organic EL element is light emitting element that includes an organic emission layer, an anode and a cathode. The organic emission layer is disposed between the anode and the cathode. Light emitted from the organic EL element is generated by applying voltage that exceeds an emission threshold voltage such that the anode attains a higher potential than the cathode (i.e., applying forward voltage).
Once such voltage is applied, electron holes are introduced from the anode to the organic emission layer, and electrons are introduced from the cathode to the organic emission layer. This excites illuminants in the organic emission layer, whereby the organic EL element emits light.
An example of a liquid crystal display device that utilizes a light emitting device which is an organic EL element as a backlight is disclosed in Japanese Laid-open Patent Publication No. 10-170918.

The light emitting device utilizing an organic EL element have a problem in that long term usage of organic EL element causes the light intensity to decrease. It is thought that the decrease in light intensity is due to electric charges being trapped and accumulating at an interface of the organic light emitting layer. Applying reverse voltage to the organic EL element is effective in preventing the decrease in emitted light intensity caused by the accumulation of electric charges. For example, Japanese Laid-open Patent Publication No. 3-110786 disclose a light emitting device that has a means for applying reverse voltage to an organic EL element.

The backlight of a liquid crystal display device must maintain a high level of emitted light intensity over a long period. However, due to long term usage, the emitted light intensity decreases over time in light emitting devices that utilize an organic EL element. The decrease in emitted light intensity over time can be mitigated by using the technique taught in Japanese Laid-open Patent Publication No. 3-110786. However, in the technique taught in Japanese Laid-open Patent Publication No. 3-110786, it is necessary to separately provide both a power source for emitting light and a power source for applying reverse voltage. As a result, the light emitting device (the backlight) becomes heavier and larger, which also makes the liquid crystal display device heavier and larger.

### Brief Summary of the Invention

It is, accordingly, an object of the present invention to present a liquid crystal display device provided with a light emitting device that utilizes an organic EL element and that functions as a backlight, wherein the liquid crystal display device can prevent the decrease in emitted light intensity of the organic EL element without increasing the size or weight of the liquid crystal display device.

In one aspect of the present invention, a liquid crystal display device may comprise a liquid crystal display unit, a backlight, and a negative voltage generating circuit. The backlight has an organic EL element, and is disposed at the posterior of the liquid crystal display unit. The negative voltage generating circuit supplies negative voltage to the liquid crystal display unit and supplies reverse voltage to the organic EL element.
In the liquid crystal display device, negative voltage required for the normal operation of the liquid crystal display unit and negative voltage for applying reverse voltage to the organic EL element are both provided by one negative voltage generating circuit. The liquid crystal display device therefore does not require a separate power source that only applies the reverse voltage to the organic EL element. With the present configuration, the liquid crystal display device can be prevented from becoming heavier and larger.
In the present specification, the application of voltage such that an anode of the organic EL element attains a higher potential than a cathode thereof is referred to as 'the application of forward voltage.' Further, the application of voltage such that the anode attains a lower potential than the cathode is referred to as 'the application of reverse voltage'.

In the liquid crystal display device, the liquid crystal display unit may comprise a liquid crystal panel and a liquid crystal driving circuit for driving the liquid crystal panel. In this case, it is preferred that the liquid crystal driving circuit and the negative voltage generating circuit are formed on the liquid crystal panel.
According to the above configuration, the circuits of the liquid crystal display unit and the negative voltage generating circuit can be designed simultaneously and also manufactured simultaneously.

The liquid crystal display device may further comprise an organic EL driving circuit for driving the organic EL element. The organic EL driving circuit may drive the organic EL element such that the organic EL element is repeatedly lit and unlit (the terms 'lit' and 'unlit' are used herein synonymously with 'turn on' and 'turn off). In this case, it is preferred that the negative voltage generating circuit applies the reverse voltage to the organic EL element when the organic EL element is unlit (turned off).
With this liquid crystal display device, the organic EL element is repeatedly turned on and off. The reverse voltage supplied from the negative voltage generating circuit can be applied to the organic EL element while the organic EL element is unlit. Further, the reverse voltage is continuously applied to the organic EL element while the liquid crystal display device (i.e. the liquid crystal display unit and the backlight) is operating. It is possible, by applying the reverse voltage, to prevent a decrease in emitted light intensity of the organic EL element.
Further, the backlight may include a plurality of organic EL elements that extend in a horizontal direction (sub scanning direction) of the liquid crystal display unit, respectively. In this case, it is preferred that the plurality of organic EL elements are aligned in a vertical direction (main scanning direction) of the liquid crystal display unit, and that the organic EL elements are caused to be lit and unlit in order in synchrony in the vertical scanning (main scanning) of the liquid crystal display unit.
In another aspect of the present invention, an electronic device may comprise a liquid crystal display unit, a backlight, and a negative voltage generating circuit. The backlight has an organic EL element, and is dispose at the posterior of the liquid crystal display unit. The negative voltage circuit supplies negative voltage to the liquid crystal display unit and supplies reverse voltage to the organic EL element.

The liquid crystal display device can be mounted in various sorts of electronic device (for example, mobile terminals and mobile telephones). The electronic device provided with the liquid crystal display device may have a function whereby the liquid crystal display device turns off after a predetermined period has elapsed in which the electronic device was not used. This function is provided to reduce the power consumption of the electronic device. In this electronic device, the power source of the electronic device stays on even though the liquid crystal display device is unlit. It is preferred that the negative voltage generating circuit applies the reverse voltage to the organic EL element when power is being supplied to the electronic device and the liquid crystal display device is unlit (in a power saving state).
For example, a computer display or a mobile telephone display assumes a waiting mode when a predetermined period of disuse has elapsed, and the display turns off (assumes a resting state). In this resting state, the backlight also turns off. The reverse voltage is applied to the organic EL element when the backlight is unlit. A decrease in the emitted light intensity of the organic EL element can thus effectively be prevented.

These aspects and features may be utilized singularly or, in combination, in order to make improved liquid crystal display device. In addition, other objects, features and advantages of the present invention will be readily understood after reading the following detailed description together with the accompanying drawings and claims. Of course, the additional features and aspects disclosed herein also may be utilized singularly or, in combination with the above-described aspect and features.

### Brief Description of the Drawings

FIG. 1 is a schematic view showing the configuration of a liquid crystal display device of an embodiment of the present invention.
FIG. 2 schematically shows the configuration of a liquid crystal unit of the embodiment.
FIG. 3 shows a cross-sectional view of an organic EL element of a backlight of the embodiment.
FIG. 4 is a timing chart for describing the operation of the liquid crystal display device of the embodiment.
FIG. 5 is a schematic view showing the configuration of a backlight of another embodiment of he present invention.

### Detailed Description of the Invention

Preferred features to practice the present invention are described below.
(Feature 1) A liquid crystal display device comprises a liquid crystal display unit having a liquid crystal panel, a backlight having an organic EL element (an organic EL light source), and a negative voltage generating circuit.
(Feature 2) A negative voltage generating circuit is formed on the liquid crystal panel. The negative voltage generating circuit supplies negative voltage to the liquid crystal display unit.
(Feature 3) The backlight (the organic EL element) is driven by a backlight driver (an organic EL driving circuit).
(Feature 4) The negative voltage generating circuit supplies the negative voltage to the backlight via the backlight driver. The backlight driver does not apply the negative voltage from the negative voltage generating circuit to the organic EL element when the backlight is lit. The backlight driver applies the negative voltage from the negative voltage generating circuit to the organic EL element when the backlight is unlit.
(Feature 5) The backlight comprises a plurality of organic EL elements driven in synchrony in a vertical scanning (main scanning) of the liquid crystal display unit.

### (First Embodiment)

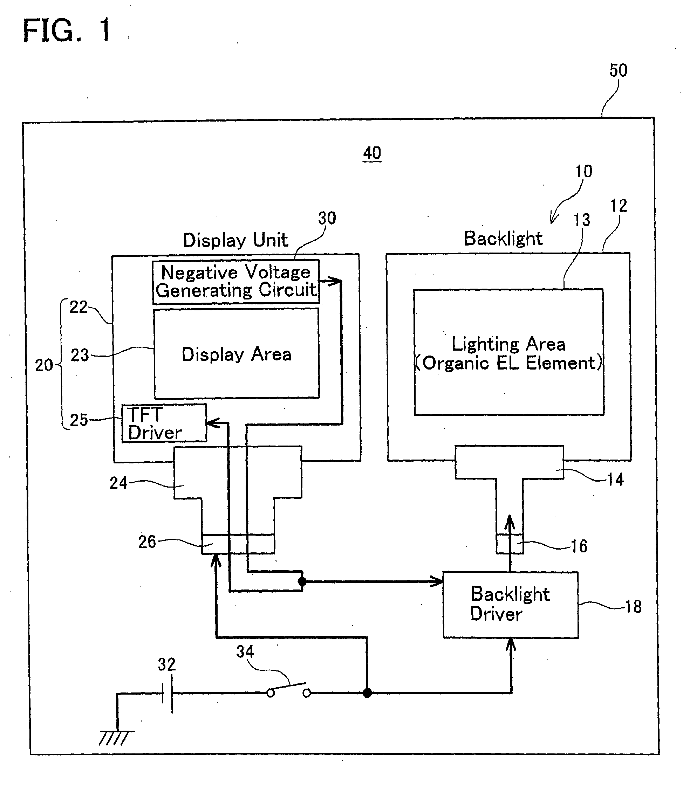

FIG. 1 is schematic view showing the configuration of a liquid crystal display device 40 of the embodiment of the present invention. The liquid crystal display device 40 is mounted in an electronic device 50 such as a mobile telephone or the like. The liquid crystal display device 40 displays images that correspond to operations of the electronic device 50 performed by a user. The liquid crystal display device 40 comprises a liquid crystal display unit 20 that utilizes liquid crystals as a display medium, and a backlight 10 that utilizes an organic EL element 13 as a light source.

The liquid crystal display unit 20 is provided with a liquid crystal panel 22, and a TFT driver 25 formed on the liquid crystal panel 22. A negative voltage generating circuit 30 is also formed on the liquid crystal panel 22.
The liquid crystal panel 22 has a pair of transparent insulating substrates (not shown), and a liquid crystal layer formed by filling liquid crystals between these substrates. Glass substrates, or the like, may be utilized as the transparent insulating substrates.

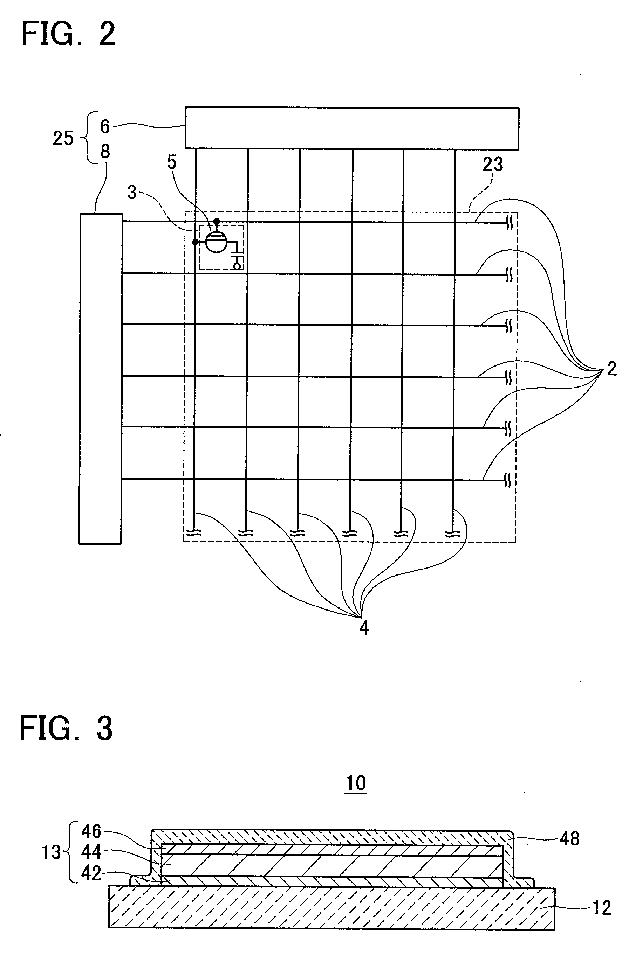

FIG. 2 schematically shows the configuration of a display area 23 of the liquid crystal panel 22. A plurality of electrodes 4 are formed in one of the transparent insulating substrates of the liquid crystal panel 22. These electrodes 4 are formed on a surface (liquid crystal layer side surface) of the transparent insulating substrate, and extend from a horizontal driving circuit 6 in a line direction (a vertical direction) of the display area 23. A plurality of electrodes 2 are formed in the other transparent insulating substrate. These electrodes 2 are also formed on a surface (liquid crystal layer side surface) of the transparent insulating substrate, and extend from a vertical driving circuit 8 in a row direction (a horizontal direction) of the display area 23. The plurality of electrodes 4 extending in the vertical direction and the plurality of electrodes 2 extending in the horizontal direction divide the liquid crystal layer into a plurality of regions (i.e. unit pixels 3) disposed in a matrix shape on the liquid crystal layer. A pixel circuit 5 having an active element (e.g., a transistor or the like) is formed in each unit pixel 3.

The TFT driver 25 and the negative voltage generating circuit 30 are formed in a region on the outer side of the display area 23 of the liquid crystal panel 22 as shown in FIG 2. The TFT driver 25 is provided with the vertical driving circuit 8 that selects the unit pixels 3 formed in the display area 23 by line units and the horizontal driving circuit 6 that supplies signals to each of the unit pixels 3 in the line unit groups selected by the vertical driving circuit 8. The voltage applied to the unit pixels 3 is determined by the horizontal driving circuit 6. The TFT driver 25 controls the voltage applied to the unit pixels 3. The TFT driver 25 controls the voltage to display a desired image in the display area 23 of the liquid crystal display device 40.

The negative voltage generating circuit 30 converts electric power input from a battery 32 into negative voltage (for example, - 5V). The negative voltage generated by the negative voltage generating circuit 30 is output to the exterior of the liquid crystal display unit 20 via a flexible substrate 24 and a connector 26. The negative voltage that has been output to the exterior of the liquid crystal display unit 20 is supplied to the TFT driver 25 via the connector 26 and the flexible substrate 24. The negative voltage that has been supplied is used by the TFT driver 25 to drive the liquid crystal display unit 20. Further, the negative voltage that has been output to the exterior of the liquid crystal display unit 20 is supplied to the backlight 10 via a backlight driver 18.

The liquid crystal display unit 20 is connected with the battery 32 via a power switch 34. When the power switch 34 is ON, the liquid crystal display unit 20 is supplied with power from the battery 32.
The liquid crystal display unit 20 can utilize a known liquid crystal display unit provided with a negative voltage generating circuit. Since the detailed configuration of the liquid crystal display unit 20 is heretofore known, a detailed description thereof is omitted. A detailed description of a liquid crystal display unit provided with a negative voltage generating circuit is set forth in, for example, Japanese Laid-open Patent Publication No. 2002-175027.

The backlight 10 is disposed at a back side (i.e., a posterior side) of the liquid crystal display unit 20. The backlight 10 is provided with a flexible substrate 14 and the organic EL element 13. The flexible substrate 14 is connected with the organic EL element 13.

FIG. 3 is a cross-sectional view of the organic EL element 13. As shown in FIG. 3, the organic EL element 13 is formed on, for example, a substrate 12, and is composed of an anode 42, an organic light emitting layer 44, and a cathode 46. A bottom emission type may be utilized as the organic EL element 13. In the bottom emission type, light emitted from the organic light emitting layer 44 is extracted from the substrate 12 side.

The substrate 12 is a plate member for supporting the organic EL element 13. A transparent substrate that has a high transmission factor for the light that is extracted is utilized as the substrate 12. Examples of the transparent substrate are a glass substrate, a transparent acrylic resin substrate, and a polyethylene terephthalate resin substrate. The same type of transparent substrates utilized for the substrate 12 can be utilized for the transparent substrates of the liquid crystal panel 22.

The anode 42 is formed from a conductive metal oxide material such as ITO (indium tin oxide), IZO (indium zinc oxide), ZnO (Zinc oxide), SnO₂ (tin oxide), etc.

A light emitting material such as Alq3 can be utilized as the organic light emitting layer 44 to achieve structures that exhibit monochromatic light that is red, green, blue, yellow, or another color. The organic light emitting layer 44 may be composed of a single light emitting material or of a plurality of light emitting materials. For example, an organic light emitting layer that emits white light can be composed of two or three or more light emitting materials that each generates different colored light. In the case where a plurality of light emitting materials are utilized, the organic light emitting layer can be formed as a laminated type wherein two or three light emitting layers are laminated, as a compound type wherein different light emitting materials are compounded into one light emitting layer, as a divided type wherein one emission layer is divided into plural sub pixels with different color. Further, the organic light emitting layer can be compound as necessary with a functional layer such as a charge (positive holes, electrons) injection layer, a charge (positive holes, electrons) transport layer, a block layer, etc.

As the cathode 46, for example, a reflecting electrode exhibiting reflectivity at least for visible light may be utilized. The reflecting electrode is made from a metal such as aluminum, gold, silver, copper or chromium, or alloy thereof.

A protective portion 48 may be formed on the outer side of the cathode 46. The protective portion 48 protects the organic light emitting layer 44 from oxygen and moisture. The protective portion 48 can be formed from a passivation layer, a sealing can, or a combination thereof.

The anode 42, the organic light emitting layer 44, the cathode 46, and the protective portion 48 can be formed using a known thin film formation method such as the vacuum vapor deposition method, the sputtering method, etc.
The anode 42 and the cathode 46 formed on the substrate 12 are connected with the backlight driver 18 via the flexible substrate 14 and a connector 16. Further, the backlight driver 18 is connected with the battery 32 via the power switch 34.

The backlight driver 18 drives the organic EL element 13 to repeatedly turn on and off while the liquid crystal display unit 20 is being driven. When forward voltage (for example, + 5V) higher than the voltage of the cathode 46 is applied to the anode 42, the organic EL element 13 turns on. When reverse voltage (for example, - 5V) lower than the voltage of the cathode 46 is applied to the anode 42, the organic EL element 13 turns off. The backlight driver 18 supplies the forward voltage and the reverse voltage alternately to the organic EL element 13. Here, the negative voltage supplied from the negative voltage generating circuit 30 is used for the reverse voltage applied to the organic EL element 13.
At this juncture, the period for which the forward voltage and reverse voltage may be applied is constant, and a repetition frequency may be 60 Hz or above. This is because organic EL elements appear to the human eye to be lit constantly when the repetition frequency is set to be 60 Hz or above.

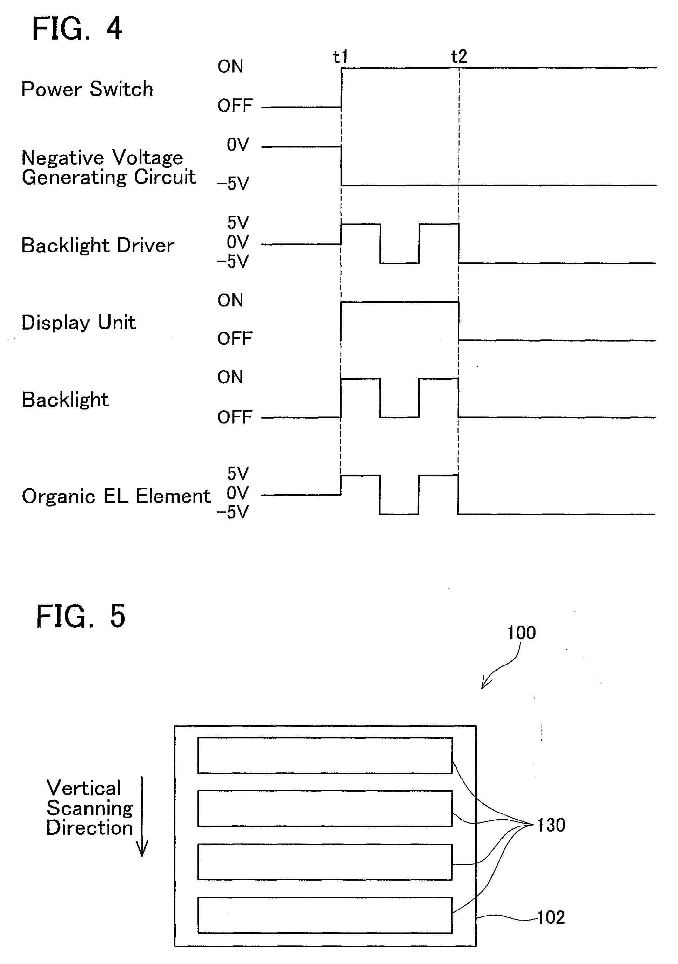

Next, the operation of the liquid crystal display device 40 will be described. FIG. 4 shows an example of a timing chart for describing the operations of the power switch 34, the negative voltage generating circuit 30, the backlight driver 18, the liquid crystal display unit 20, the backlight 10, and the organic EL element 13.
As shown in FIG. 4, when the power switch 34 is OFF, neither the negative voltage generating circuit 30 nor the backlight driver 18 is operating, and the liquid crystal display unit 20 and the backlight 10 (the organic EL element 13) are unlit.

When the power switch 34 is turned ON (at time t1), first the negative voltage generating circuit 30 starts to output a - 5V negative voltage. Then, the backlight driver 18 starts to output pulse signals. Simultaneously, the liquid crystal display unit 20 starts to show a display. Pulse signals with an amplitude of + 5V to - 5V are applied to the organic EL element 13. As a result, the organic EL element 13 (i.e., the backlight 10) is driven by the pulses and repeatedly turns on and off. The reverse voltage is applied to the organic EL element 13 when the organic EL element 13 is in the turned off (unlit) state.

When the liquid crystal display device 40 is not used for a predetermined time (time t2), the liquid crystal display device 40 assumes a waiting state. In the waiting state, the liquid crystal display unit 20 turns off and the backlight driver 18 stops outputting the pulse signals. As a result, the backlight 10 is unlit in the waiting state. Further, the backlight driver 18 also outputs the negative voltage after the output of pulse signals has stopped. Reverse voltage consequently continues to be applied to the organic EL element 13.

As is clear from the above description, in the liquid crystal display device 40 of the embodiment, the negative voltage output from the negative voltage generating circuit 30 is utilized to apply reverse voltage to the backlight 10 (i.e., the organic EL element 13). The liquid crystal display device 40 is provided with the negative voltage generating circuit 30 for driving the liquid crystal display unit 20. In the liquid crystal display device 40, therefore, the backlight driver 18 does not need to be provided with a power source circuit for negative voltage, and the configuration of the backlight driver 18 can thus be simplified.
Furthermore, the liquid crystal driving circuit and the negative voltage generating circuit can be manufactured simultaneously. Furthermore, the backlight 10 (i.e., the organic EL element 13) repeatedly and alternately turns on and off based on the pulse driving operation, and the reverse voltage is applied thereto while the backlight 10 is turned off. Further, the reverse voltage is also applied to the organic EL element 13 while the liquid crystal display unit 20 and the backlight 10 are in the waiting state and are unlit. The reverse voltage is continuously applied to the organic EL element while the liquid crystal display device (i.e. the liquid crystal display unit and the backlight) is operating. As a result, the decrease in emitted light intensity of the organic EL element 13 is prevented, and the liquid crystal display device 40 can maintain high image quality over a long period.

In another liquid crystal display device of the present invention, the backlight may include a plurality of the organic EL elements. Each of these organic EL elements may extend in a horizontal direction of the liquid crystal display unit. These organic EL elements may be aligned in the vertical direction of the liquid crystal display unit in order to form the backlight. In this case, the organic EL elements may be repeatedly lit and unlit in synchrony in the vertical scanning (main scanning) of the liquid crystal display unit.

For example, as shown in FIG. 5, the backlight 100 may comprise a plurality (four in FIG. 5) of organic EL elements 130 aligned on the glass substrate 120. Each of the organic EL elements 130 has a strip shape or line shape, and extends in the horizontal direction of the liquid crystal display unit. These organic EL elements 130 are aligned in the vertical direction of the liquid crystal display unit.

In the case where an active matrix liquid crystal panel is utilized in the liquid crystal panel of the liquid crystal display unit, the organic EL elements 130, which correspond to the line (i.e., pixel rows extending in the horizontal direction) of the liquid crystal display unit into which data is being written, are turned off, and the organic EL elements 130, which correspond to the line of the liquid crystal display unit in which the orientation of liquid crystal molecules is changing after the data has been written, are also turned off. All or some of the remaining organic EL elements 13 are lit. In this manner, if the lighting or non-lighting of the organic EL elements 130 that comprise the backlight 100 is controlled in synchrony in the vertical scanning (main scanning) of the liquid crystal display unit, the picture quality of animations of the liquid crystal display unit can improve.

Furthermore, in the case where the liquid crystal display unit utilizes a passive matrix liquid crystal panel, only the organic EL elements 130, which correspond to the line of the liquid crystal display unit into which data is written, are turned on. In the passive matrix liquid crystal panel, only the line into which data is written are visible, and desired images are not displayed on the remaining lines. As a result, when the lighting and non-lighting of the organic EL elements 130 that comprise the backlight 100 is controlled in synchrony in the vertical scanning of the liquid crystal display unit, it is possible to turn off the organic EL elements 130 that correspond to the lines in which the desired image is not to be displayed. This allows power consumption to be reduced.

Various modifications, corrections, transformations and/or improvements may be made to the embodiment described above. Various modifications can be made without deviating from the substance and scope of the appended claims. The device and method of the present invention thus encompass all modifications, corrections, transformations and/or improvements that are well-known or developed later.

For example, in the embodiment described above, the reverse voltage (the negative voltage) is usually applied to the organic EL element 13 while the forward voltage is not being applied to the backlight 10. However, various modifications can be made to the time and method for applying the reverse voltage to the organic EL element 13. For example, the reverse voltage may not be applied while the liquid crystal display unit 20 and the backlight 10 are being driven, and instead the reverse voltage may be applied only when the liquid crystal display unit 20 and the backlight 10 are in the waiting state.

Further, in the case where the reverse voltage is applied when the liquid crystal display unit 20 and the backlight 10 are in the waiting state, the time at which the reverse voltage is applied can be modified. For example, the reverse voltage may be applied for a predetermined period from the time the waiting state starts, or the reverse voltage may be applied continuously throughout the waiting state. Moreover, the time at which the reverse voltage is applied can be modified to correspond to the driving period of the liquid crystal display unit 20 and the backlight 10 immediately prior to the waiting state. For example, in the case where the driving period of the liquid crystal display unit 20 and the backlight 10 immediately prior to the waiting state is long, the reverse voltage is applied for a long period. In the case where the driving period of the liquid crystal display unit 20 and the backlight 10 immediately prior to the waiting state is short, the reverse voltage is applied for a short period. The reverse voltage can thus be applied to the organic EL element 13 for the time needed to prevent the decrease in emitted light intensity of the organic EL element 13.
The decrease in the emitted light intensity of the organic EL element can thus effentively be prevented.

Furthermore, the negative voltage generating circuit 30 need not be formed on the liquid crystal panel 22. Instead, the negative voltage generating circuit 30 may be formed separately from the liquid crystal panel 22, and may supply negative voltage to the liquid crystal panel 22 and reverse voltage to the organic EL element 13.
The liquid crystal display device 40 can have various display features irrespective of whether the display is color or black and white.
The organic EL element 13 is formed as a bottom emission type. However, the organic EL element 13 may be formed as a top emission type wherein light emitted from the organic light emitting layer is extracted from the side opposite to the substrate side. In this case, the substrate 12 may be a transparent substrate such as a glass substrate or the like, or may be a non-transparent substrate such as a metal substrate. However, the protective portion and the cathode at the side where the light is fetched must be transparent.
The liquid crystal display device of the present invention may of course be mounted in small electronic devices such as mobile telephones, digital video cameras, digital cameras, etc. Further, the liquid crystal display device may be mounted in medium and large electronic devices such as computer displays, liquid crystal televisions, etc.

Finally, although the preferred embodiments have been described in detail, the present embodiments are for illustrative purpose only and not restrictive. It is to be understood that various changes and modifications may be made without departing from the spirit or scope of the appended claims. In addition, the additional features and aspects disclosed herein also may be utilized singularly or in combination with the above aspects and features.
A liquid crystal display device (40) may comprise a liquid crystal display unit (20), a backlight (10), and a negative voltage generating circuit (30). The backlight (10) may be disposed at the posterior of the liquid crystal display unit (20). The backlight (10) may include an organic EL element (13). The negative voltage generating circuit (30) preferably supplies negative voltage to the liquid crystal display unit (20) and supplies reverse voltage to the organic EL element (13).

## Claims

1. A liquid crystal display device comprising:
a liquid crystal display unit,
a backlight disposed at the posterior of the liquid crystal display unit, the backlight having an organic electroluminescence element, and
a negative voltage generating circuit connected with the liquid crystal display unit and the backlight, the negative voltage generating circuit supplying negative voltage to the liquid crystal display unit and supplying reverse voltage to the organic electroluminescence element.

2. A liquid crystal display device according to claim 1,
wherein the liquid crystal display unit comprises a liquid crystal panel and a liquid crystal driving circuit for driving the liquid crystal panel, and
wherein the negative voltage generating circuit and the liquid crystal driving circuit are formed on the liquid crystal panel.

3. A liquid crystal display device according to claim 1 or 2, further comprising an organic electroluminescence driving circuit connected with the negative voltage generating circuit and the organic electroluminescence element, the organic electroluminescence driving circuit (1) driving the organic electroluminescence element to repeatedly turn on and off and (2) applying reverse voltage to the organic electroluminescence element using the negative voltage supplied from the negative voltage generating circuit when the organic electroluminescence element is unlit.

4. A liquid crystal display device according to claim 3,
wherein the backlight includes a plurality of organic electroluminescence elements aligned in a vertical direction of the liquid crystal display unit, and
wherein the organic electroluminescence driving circuit drives the organic electroluminescence element to turn on and off in synchrony in the vertical scanning of the liquid crystal display unit.

5. An electronic device comprising:
a liquid crystal display unit,
a backlight disposed at the posterior of the liquid crystal display unit, the backlight having an organic electroluminescence element, and
a negative voltage generating circuit connected with the liquid crystal display unit and the backlight, the negative voltage generating circuit supplying negative voltage to the liquid crystal display unit and supplying reverse voltage to the organic electroluminescence element.

6. An electronic device according to claim 5,
wherein the liquid crystal display unit comprises a liquid crystal panel and a liquid crystal driving circuit for driving the liquid crystal panel, and
wherein the negative voltage generating circuit and the liquid crystal driving circuit are formed on the liquid crystal panel.

7. An electronic device according to claim 5 or 6, further comprising an organic electroluminescence driving circuit connected with the negative voltage generating circuit and the organic electroluminescence element, the organic electroluminescence driving circuit (1) driving the organic electroluminescence element to repeatedly turn on and off and (2) applying reverse voltage to the organic electroluminescence element using the negative voltage supplied from the negative voltage generating circuit when the organic electroluminescence element is unlit.

8. An electronic device according to claim 7,
wherein the backlight includes a plurality of organic electroluminescence elements aligned in a vertical direction of the liquid crystal display unit, and
wherein the organic electroluminescence driving circuit drives the organic electroluminescence element to turn on and off in synchrony in the vertical scanning of the liquid crystal display unit.

9. An electronic device according to claim 5,
wherein the negative voltage generating circuit applies reverse voltage to the organic electroluminescence element when the light liquid crystal display unit and the backlight is in waiting state
